# FASCICULE DE BREVET EUROPEEN

(11) **EP 2 074 919 B1**
(45) Date de publication et mention de la délivrance du brevet: **01.12.2010**
(21) Numéro de dépôt: 08356153.0
(22) Date de dépôt: 16.12.2008
(51) Int. Cl.: A47J 43/08

(54) **Appareil électroménager de préparation culinaire comprenant un boîtier comportant plusieurs entraîneurs au niveau d'un socle de réception**
Elektrisches Haushaltsgerät mit einem Gehäuse mit mehreren auf einen Sockel gelagerten Antriebsmitteln
Electrical kitchen appliance comprising a casing with several driving means located on a supporting base

(30) Priorité: 19.12.2007 FR 0708865
(43) Date de publication de la demande: 01.07.2009
(73) Titulaire: SEB S.A., 69130 Ecully (FR)
(72) Inventeur: Feron, Stéphanie, 53440 Marcille La Ville (FR); Follezour, Anne-Estelle, 53100 Chatillon sur Colmont (FR)
(74) Mandataire: Kiehl, Hubert

(56) Documents cités:
- WO-A-01/97667
- DE-A1- 2 357 025
- DE-A1- 3 933 036
- DE-C- 966 548
- GB-A- 2 398 851
- US-A- 3 385 117
- US-A- 5 592 872

## Description

La présente invention se rapporte au domaine technique général des appareils électroménagers de préparation culinaire comportant un boîtier renfermant un moteur comprenant un arbre de sortie permettant l'entraînement en rotation d'au moins un premier et un deuxième entraîneur décalés axialement l'un par rapport à l'autre, et se rapporte plus particulièrement à un appareil électroménager de préparation culinaire dans lequel les deux entraîneurs sont disposés au niveau d'un même socle de réception destiné à recevoir alternativement au moins un premier récipient renfermant un outil de travail venant s'accoupler sur le premier entraîneur et un deuxième récipient renfermant un outil de travail venant s'accoupler sur le deuxième entraîneur.

Il est connu, de la demande de brevet DE 39 33 036, un appareil de préparation culinaire comportant un boîtier renfermant un moteur comportant un arbre de sortie assurant l'entraînement simultané de deux entraîneurs à des vitesses de rotation différentes, les deux entraîneurs étant disposés au niveau d'un même socle de réception destiné à recevoir alternativement un premier ou un second récipient renfermant un outil de travail venant s'accoupler sur l'un des entraîneurs. Un tel appareil présente l'avantage de permettre l'obtention d'un robot ménager permettant à la fois la réalisation de préparation nécessitant un outil tournant à très haute vitesse, en utilisant le récipient comportant l'outil de travail s'accouplant à l'entraîneur tournant à haute vitesse, et la réalisation de préparation nécessitant plus de couple, en utilisant le second récipient comportant un outil de travail s'accouplant à l'entraîneur entraîné par l'intermédiaire du réducteur de vitesse.

Cependant, un tel appareil, faisant appel à des courroies pour l'entraînement des entraîneurs, présente l'inconvénient d'être relativement coûteux à mettre en oeuvre. De plus, un tel appareil présente l'inconvénient d'être relativement encombrant.

Aussi, un but de la présente invention est de proposer un appareil de préparation culinaire, pouvant recevoir différents types de récipients sur un logement de réception comportant deux entraîneurs tournant à des vitesses différentes, qui soit compact et économique à mettre en oeuvre.

A cet effet, l'invention se rapporte à un appareil électroménager de préparation culinaire comportant un boîtier renfermant un moteur comprenant un arbre de sortie entraînant simultanément, à des vitesses de rotation différentes, au moins un premier entraîneur et un deuxième entraîneur décalés axialement l'un part rapport à l'autre et disposés au niveau d'un même socle de réception, l'appareil comportant au moins un premier récipient et un deuxième récipient pouvant être disposés alternativement sur le socle de réception en venant recouvrir l'ensemble des entraîneurs, le premier récipient renfermant un outil de travail venant s'accoupler sur le premier entraîneur et le deuxième récipient renfermant un outil de travail venant s'accoupler sur le deuxième entraîneur, caractérisé en ce que le premier entraîneur est monté directement sur l'arbre de sortie du moteur, le moteur étant disposé sous le socle de réception, et en ce que le deuxième entraîneur est relié à l'arbre de sortie moteur par l'intermédiaire d'un réducteur de vitesse.

Selon une autre caractéristique de l'invention, le moteur occupe une position excentrée dans le boîtier, le premier entraîneur occupant une position excentrée sur le socle de réception.

Selon une autre caractéristique de l'invention, un tiroir de rangement est disposé dans le boîtier à l'opposé du moteur.

Selon une autre caractéristique de l'invention, le moteur est disposé en bordure de la périphérie du boîtier.

Selon encore une autre caractéristique de l'invention, le deuxième entraîneur occupe une position centrale sur le socle de réception.

Selon encore une autre caractéristique de l'invention, le réducteur est constitué par un pignon porté par l'arbre de sortie du moteur qui engrène sur une roue dentée solidaire en rotation du deuxième entraîneur.

Selon une autre caractéristique de l'invention, le premier et le deuxième récipient présentent des formes et des dimensions différentes, le socle de réception comportant, pour chacun des récipients, une empreinte adaptée pour coopérer avec l'extrémité inférieure du récipient et positionner ce dernier de telle sorte que son outil de travail vienne s'accoupler avec l'un des entraîneurs.

Selon une autre caractéristique de l'invention, l'outil de travail occupe une position excentrée dans le fond du premier récipient.

Selon encore une autre caractéristique de l'invention, le premier récipient comporte un fond présentant une partie basse recevant l'outil de travail et une partie surélevée formant une marche dans le fond du récipient, la partie surélevée étant reliée à la partie basse par une surface courbe présentant un point d'inflexion.

Selon une autre caractéristique de l'invention, le deuxième récipient comporte un fond présentant une forme cylindrique, l'outil de travail étant centré dans le fond du deuxième récipient.

Selon une autre caractéristique de l'invention, le boîtier renferme un dispositif de sécurité comportant un interrupteur de sécurité actionnable par une tige de sécurité s'étendant à l'intérieur du boîtier, la tige de sécurité étant déplacée en translation par la jupe du récipient ou par un organe de détection porté par le récipient.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un boîtier moteur d'appareil de préparation culinaire selon un mode particulier de réalisation de l'invention,
- les figures 2 et 3 sont respectivement des vues en perspective du boîtier moteur de la figure 1 accouplé à un récipient blender et à un récipient hachoir,
- la figure 4 est une vue en perspective du boîtier sans la coque supérieure.
- les figures 5 et 6 sont respectivement des vues en coupe longitudinale de l'appareil représenté aux figures 2 et 3.
- la figure 7 est une vue en coupe de l'appareil selon le plan passant par la poignée du récipient hachoir.

Seuls les éléments nécessaires à la compréhension de l'invention ont été représentés. Pour faciliter la lecture des dessins les mêmes éléments portent les mêmes références d'une figure à l'autre.

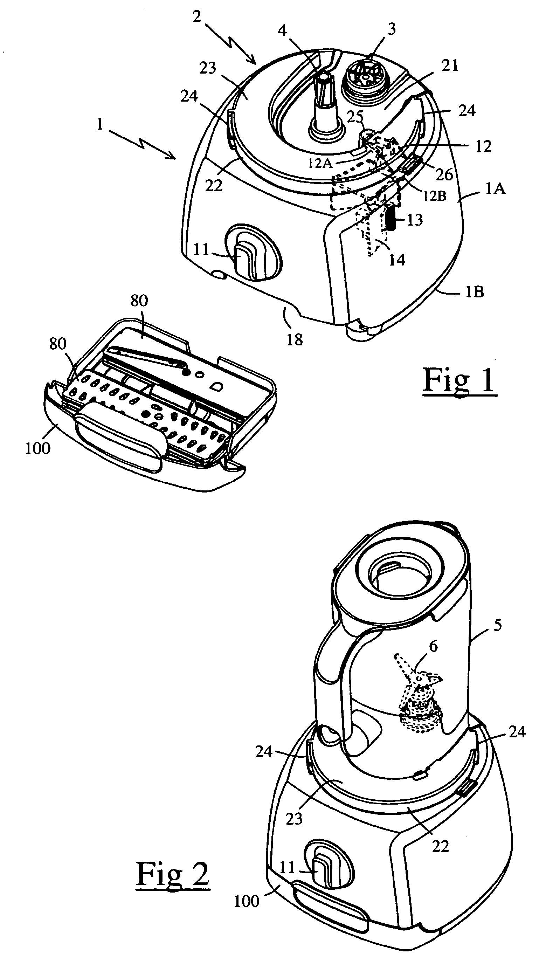

La figure 1 illustre un appareil de préparation culinaire comportant un boîtier 1 présentant une forme monobloc comprenant une face avant sensiblement plane et une partie arrière sensiblement cylindrique. De manière préférentielle, le boîtier 1 est constitué par l'assemblage d'une coque supérieure 1 A sur une coque inférieure 1 B et présente une largeur de l'ordre de 19 cm, une profondeur de l'ordre de 20 cm et une hauteur de l'ordre de 16 cm.

Le boîtier 1 comporte une face supérieure comprenant un socle de réception 2 comportant un entraîneur 3 excentré présentant la forme d'une bague dentée faisant saillie sur l'arrière du boîtier 1 et un entraîneur 4 central présentant la forme d'un arbre muni de nervures, l'entraîneur 4 central s'étendant sur une hauteur plus importante que l'entraîneur 3 excentré.

Le socle de réception 2 comporte une première empreinte 21, en creux, présentant un contour oblong adapté pour recevoir l'extrémité inférieure d'un récipient 5 de type blender, relativement haut et étroit, ainsi que cela est illustré à la figure 2. Ce récipient 5 renferme un outil de mixage 6, représenté en pointillé, dont l'extrémité inférieure est adaptée pour s'accoupler avec l'entraîneur 3 excentré.

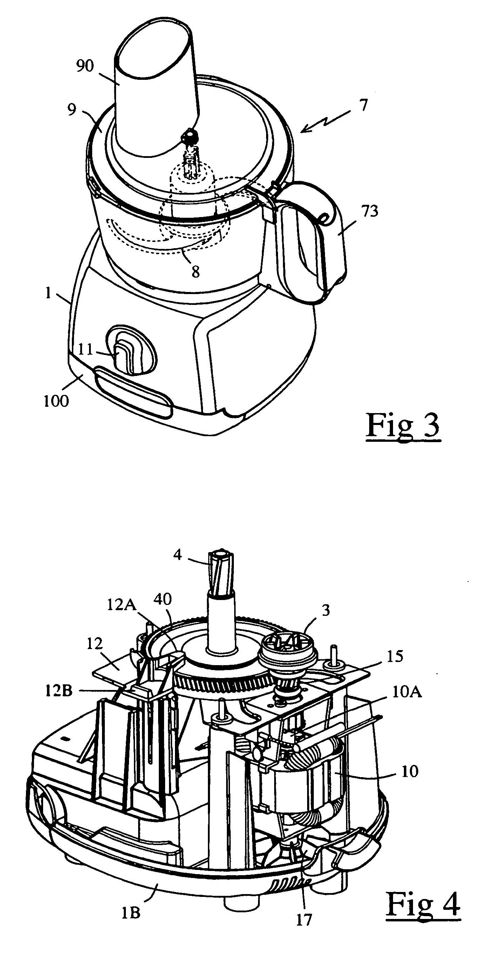

Le socle de réception 2 comporte également une seconde empreinte 22, en relief, présentant un contour sensiblement circulaire adaptée pour recevoir l'extrémité inférieure d'un récipient 7 de type hachoir, plus large et moins haut que le récipient blender 5, ainsi que cela est illustré sur la figure 3. Ce récipient renferme un outil coupant 8, ou un disque à râper, venant s'accoupler sur l'entraîneur central 4.

Conformément aux figures 1 à 3, la première empreinte 21 contient les deux entraîneurs 3, 4 et est incluse dans la surface couverte par la seconde empreinte 22 du socle de réception de sorte que chaque récipient 5, 7 vient recouvrir l'ensemble des entraîneurs 3, 4 lorsqu'il est correctement engagé sur le socle de réception 2.

De manière avantageuse, la première empreinte 21 présente un contour délimité en partie par la surface intérieure d'un bossage 23 en forme de U faisant saillie sur le socle de réception 2, la surface extérieure de ce bossage 23 définissant le contour circulaire de la seconde empreinte 22 et comportant des rampes 24 de verrouillage par rotation du récipient hachoir 7 sur le socle de réception 2.

Le boîtier 1 renferme un moteur électrique 10, visible sur la figure 4, dont le fonctionnement est commandé par un bouton de commande 11 disposé sur la face avant du boîtier 1. Le boîtier 1 comporte une tige de sécurité 12, représentée en pointillé sur la figure 1, pouvant se déplacer verticalement à l'encontre d'un ressort 13 pour actionner un interrupteur 14 autorisant la mise en route du moteur uniquement lorsque l'un des récipients 5, 7 est engagé sur le socle de réception 2.

Conformément à la figure 1, la tige de sécurité 12 présente une première partie 12A s'étendant en bordure de la première empreinte 21, entre un plot 25 et le bossage 23, et sur laquelle vient appuyer l'extrémité inférieure du récipient blender 5 lorsque ce dernier est mise en place sur le socle de réception 2.

La surface intérieure du bossage 23 comporte avantageusement une languette élastique venant coopérer avec le récipient blender 5 pour immobiliser verticalement ce dernier et contrer notamment l'effort généré par le ressort 13 de rappel de la tige de sécurité 12. Un tel dispositif d'immobilisation du récipient blender 5 par languette élastique est en tout point conforme à celui décrit dans la demande de brevet FR 07 01613 déposée par la demanderesse.

La tige de sécurité 12 comporte également une seconde partie 12B s'étendant derrière une ouverture 26 disposée à la périphérie du bossage 23.

Plus particulièrement selon l'invention, et conformément à la figure 4 illustrant le boîtier 1 démuni de sa coque supérieure 1 A, le moteur 10 électrique est disposé dans la partie arrière du boîtier 1, en bordure de la paroi périphérique du boîtier 1, le moteur 10 comportant un arbre de sortie 10A dont l'extrémité supérieure est accouplée directement à l'entraîneur 3 excentré.

L'arbre de sortie 10A du moteur supporte également un pignon 15 disposé sous l'entraîneur 3 excentré, ce pignon 15 étant disposé à l'intérieur du boîtier 1 et présentant un diamètre de l'ordre de 15 mm. Ce pignon 15 est engrené sur une roue dentée 40 d'un diamètre de l'ordre de 100 mm qui s'étend sous le socle de réception 2 et qui est solidaire de l'entraîneur 4 central de manière à entraîner ce dernier avec une vitesse réduite de plus de six fois par rapport à la vitesse de rotation du moteur 10.

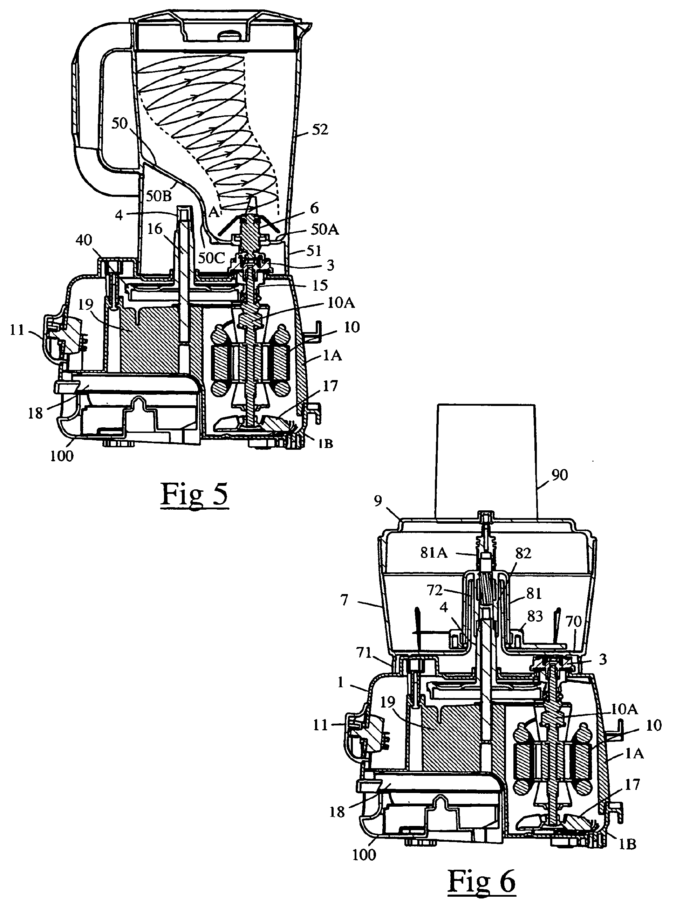

La roue dentée 40 et l'entraîneur 4 central sont avantageusement constitués par une seule pièce en matière plastique obtenue par moulage, cette pièce étant rapportée sur un arbre 16 métallique, visible sur la figure 5, s'étendant verticalement au centre du boîtier 1.

Afin de favoriser le refroidissement du moteur, l'extrémité inférieure de l'arbre 10A est reliée à un ventilateur de refroidissement 17 et la coque inférieure 1 B du boîtier comporte des fentes pour la circulation de l'air sous ce ventilateur 17.

Le moteur 10 est préférentiellement un moteur de type universel, d'une puissance comprise entre 500W et 700W, et présente un encombrement radial de l'ordre de 6 cm de sorte que le moteur 10 occupe un espace réduit à l'arrière du boîtier 1.

Conforment aux figures 5 et 6, l'espace laissé libre à l'avant du boîtier 1 reçoit un tiroir de rangement 100 amovible, visible en position de retrait sur la figure 1, s'engageant dans une cavité 18 s'étendant dans la partie inférieure avant du boîtier 1, cette cavité 18 étant surmontée d'une cloison 19 supportant l'arbre 16.

De manière avantageuse, le tiroir de rangement 100 présente une forme adaptée pour recevoir différents outils utilisables avec le récipient hachoir 7 et notamment différentes lames 80 utilisables avec un disque à râper s'engageant à l'extrémité supérieure du moyeu de l'outil 8.

Conformément à la figure 5, le récipient blender 5, venant s'engager sur la première empreinte 21 du socle de réception du boîtier 1, comporte un fond 50 surélevé par une jupe 51 s'étendant sous le fond 50 du récipient, la jupe 51 présentant une forme oblongue complémentaire à la forme de la première empreinte 21 du socle de réception.

De manière avantageuse, le récipient blender 5 comporte, au dessus de la jupe 51, une enveloppe 52 dont la surface intérieure est lisse, c'est-à-dire démunie de nervure. Le fond 50 du récipient comporte, d'un côté, une partie basse 50A présentant une surface plane, sensiblement horizontale, formant une cavité où est disposé l'outil coupant 6 excentré et, de l'autre côté, une partie surélevée 50B s'étendant au dessus de l'entraîneur central 4 et présentant une surface inclinée en direction de la partie basse 50A, la partie basse 50A étant reliée à la partie surélevée 50B par une surface courbe 50C comportant un point d'inflexion A permettant de créer un flux de mixage générant un vortex suivant les flèches illustrées sur la figure 5.

Un tel récipient 5 présente l'avantage de permettre l'obtention d'un flux de mixage générant un excellent brassage des aliments tout en chargeant peu l'outil coupant 6, permettant ainsi d'utiliser un moteur 10 de faible puissance. De plus, l'enveloppe 52 du récipient étant démunie de nervure interne, elle présente l'avantage d'une très grande facilité de nettoyage.

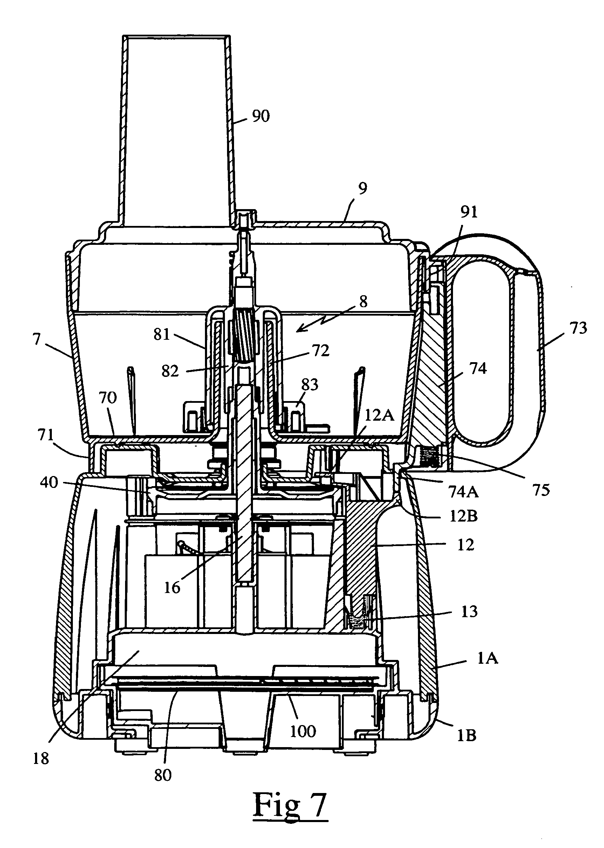

Conformément aux figures 6 et 7, le récipient hachoir 7, venant s'engager sur la seconde empreinte 22 du socle de réception 2 du boîtier, comporte un fond 70 surélevé par une jupe circulaire 71 s'étendant sous le fond 70 du récipient, la jupe 71 présentant un diamètre légèrement supérieur au diamètre du bossage 23 du socle de réception et comportant des nervures, non visible sur les figures, venant s'engager, de manière connue en soi, dans les rampes 24 de verrouillage du socle de réception 2 pour constituer une liaison de type baïonnette.

Le récipient 7 comporte une cheminée centrale 72 dans laquelle vient s'engager l'entraîneur central 4 lorsque le récipient hachoir 7 est placé sur le socle de réception 2, l'outil 8 comportant un moyeu 81 comprenant un manchon d'accouplement 82 s'introduisant dans la cheminée centrale 72 pour s'accoupler sur l'entraîneur 4 central.

Le moyeu 81 peut recevoir une bague 83 amovible supportant au moins une lame coupante, la bague 83 étant adaptée pour s'engager autour de la partie inférieure du moyeu 81 et être solidaire en rotation de ce dernier. Le moyeu 81 comporte également une partie supérieure effilée dont l'extrémité vient s'engager dans un palier porté par un couvercle 9 de fermeture du récipient de manière à assurer un guidage complémentaire du moyeu 81.

La partie supérieure du moyeu 81 comporte, de manière connue en soi, une zone 81A d'accouplement avec un disque support, non représenté sur les figures, adapté pour supporter différents types de lames d'outils permettant de découper en rondelle ou râper des légumes introduits par une goulotte d'alimentation 90 du couvercle 9.

Conformément à la figure 7, le récipient 7 comporte une poignée 73 comprenant un organe 74 de détection de la présence du couvercle 9 s'étendant verticalement en bordure du récipient 7 et comprenant un extrémité inférieure munie d'un doigt d'activation 74A venant en regard de la seconde partie 12B de la tige de sécurité 12 du boîtier. Cet organe 74 est mobile en translation entre une position haute, vers laquelle il est ramené par un ressort 75, dans laquelle le doigt d'activation 74A est rétracté dans la jupe 71 du récipient et une position basse, illustrée à la figure 7, dans laquelle le doigt d'activation 74A fait saillie en dessous de la jupe 71 et vient déplacer la tige de sécurité 12.

Le couvercle 9 comporte, de manière connue en soi, un ergot 91 venant s'insérer dans une ouverture disposée à l'extrémité supérieure de la poignée 73 lors du verrouillage du couvercle 9 sur le récipient 7, l'ergot 91 venant déplacer l'organe de détection 74 vers la position basse pour fermer l'interrupteur 14 et autoriser alors la mise en marche du moteur.

Un tel appareil électroménager présente l'avantage de posséder un boîtier moteur offrant une très grande compacité, avec une surface occupée au sol réduite, et permettant la réalisation de nombreuses préparations puisque cet appareil peut être utilisé, au choix, avec un récipient renfermant un outil rotatif venant s'accoupler sur l'entraîneur excentré tournant à haute vitesse ou avec un récipient renfermant un outil rotatif venant s'accoupler sur l'entraîneur central tournant à vitesse réduite.

Un tel appareil présente également l'avantage d'être simple et économique à mettre en oeuvre, notamment grâce l'accouplement direct de l'entraîneur à haute vitesse sur l'arbre de sortie moteur, un tel agencement permettant d'utiliser les paliers du moteur pour assurer le guidage en rotation de l'entraîneur, ce qui permet d'éviter l'utilisation d'un palier de guidage supplémentaire pour l'entraîneur à haute vitesse. L'entraînement simultané des deux entraîneurs permet également d'avoir un mécanisme d'entraînement fiable et peu coûteux, la sécurité vis-à-vis de l'utilisateur étant assurée par le fait que chaque récipient recouvre l'ensemble des entraîneurs, les rendant ainsi inaccessibles lors du fonctionnement de l'appareil.

De plus, un tel appareil avec un moteur excentré présente l'avantage d'offrir une optimisation de la capacité de rangement du boîtier en permettant notamment l'introduction d'un tiroir de rangement à l'opposé du moteur.

Enfin, l'utilisation d'un récipient blender muni d'un outil rotatif excentré, disposé dans une cavité au fond du récipient, présente l'avantage de réduire la charge sur l'outil lors du traitement des aliments, ce qui permet d'utiliser un moteur de plus faible puissance et donc moins cher et moins encombrant.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, les récipients pourront avoir des dimensions et des formes différentes.

## Revendications

1. Appareil électroménager de préparation culinaire comportant un boîtier (1) renfermant un moteur (10) comportant un arbre de sortie (10A) entraînant simultanément, à des vitesses de rotation différentes, au moins un premier entraîneur (3) et un deuxième (4) entraîneur décalés axialement l'un part rapport à l'autre et disposés au niveau d'un même socle de réception (2), ledit appareil comportant au moins un premier récipient (5) et un deuxième récipient (7) pouvant être disposés alternativement sur ledit socle de réception (2) en venant recouvrir l'ensemble des entraîneurs (3, 4), le premier récipient (5) renfermant un outil de travail (6) venant s'accoupler sur le premier entraîneur (3) et le deuxième récipient (7) renfermant un outil de travail (8) venant s'accoupler sur le deuxième entraîneur (4), **caractérisé en ce que** le premier entraîneur (3) est monté directement sur l'arbre de sortie (10A) du moteur, ledit moteur (10) étant disposé sous le socle de réception (2), et **en ce que** le deuxième entraîneur (4) est relié à l'arbre de sortie moteur (10A) par l'intermédiaire d'un réducteur de vitesse (15, 40).

2. Appareil électroménager selon la revendication 1, **caractérisé en ce que** ledit moteur (10) occupe une position excentrée dans le boîtier (1), le premier entraîneur (3) occupant une position excentrée sur le socle de réception (2).

3. Appareil électroménager selon la revendication 2, **caractérisé en ce qu'**un tiroir (100) de rangement est disposé dans le boîtier (1) à l'opposé du moteur (10).

4. Appareil électroménager selon l'une quelconque des revendications 2 à 3, **caractérisé en ce que** le moteur (10) est disposé en bordure de la périphérie du boîtier (1).

5. Appareil électroménager selon l'une quelconque des revendications 2 à 4, **caractérisé en ce que** le deuxième entraîneur (4) occupe une position centrale sur le socle de réception (2).

6. Appareil selon l'une quelconque des revendications 1 à 5, **caractérisé en ce que** le réducteur est constitué par un pignon (15) porté par l'arbre de sortie (10A) du moteur qui engrène sur une roue dentée (40) solidaire en rotation du deuxième entraîneur (4).

7. Appareil électroménager selon l'une quelconque des revendications 1 à 6, **caractérisé en ce que** le premier récipient (5) et le deuxième (7) récipient présentent des formes et des dimensions différentes et **en ce que** le socle de réception (2) comporte, pour chacun des récipients (5, 7), une empreinte (21, 22) adaptée pour coopérer avec l'extrémité inférieure du récipient (5, 7) et positionner ce dernier de telle sorte que son outil de travail (6, 8) vienne s'accoupler avec l'un des entraîneurs (3, 4).

8. Appareil selon l'une quelconque des revendications 1 à 7, **caractérisé en ce que** l'outil de travail (6) occupe une position excentrée dans le fond du premier récipient (5).

9. Appareil selon la revendication 8, **caractérisé en ce que** le premier récipient (5) comporte un fond (50) présentant une partie basse (50A) recevant l'outil de travail (6) et une partie surélevée (50B) formant une marche dans le fond du récipient, la partie surélevée (50B) étant reliée à la partie basse (50A) par une surface courbe (50C) présentant un point d'inflexion (A).

10. Appareil selon l'une quelconque des revendications 1 à 9, **caractérise en ce que** le deuxième récipient (7) comporte un fond (70) présentant une forme cylindrique et **en ce que** l'outil de travail (8) est centré dans le fond (70) du récipient.

11. Appareil selon l'une quelconque des revendications 1 à 10, **caractérisé en ce que** le boîtier (1) renferme un dispositif de sécurité comportant un interrupteur de sécurité (14) actionnable par une tige de sécurité (12) s'étendant à l'intérieur du boîtier (1), ladite tige de sécurité (12) étant déplacée en translation par la jupe (51) du récipient (5) ou par un organe de détection (74) porté par le récipient (7).

## Claims

1. An electrical household food-preparation appliance having a casing (1) containing a motor (10) with an output shaft (10A) that drives simultaneously, at different speeds of rotation, at least a first driver (3) and a second driver (4), these drivers being separated axially from each other and arranged in the same receiving base (2), said appliance comprising at least a first container (5) and a second container (7), any of which may be placed on said receiving base (2) to cover all of the drivers (3, 4), the first container (5) containing a work tool (6) which engages on the first driver (3) and the second container (7) containing a work tool (8) which engages on the second driver (4), said appliance being **characterized in that** the first driver (3) is mounted directly on the output shaft (10A) of the motor, said motor (10) being located underneath the receiving base (2), and **in that** the second driver (4) is connected to the motor output shaft (10A) via a speed reducer (15, 40).

2. An electrical household appliance according to claim 1 , **characterised in that** said motor (10) occupies an eccentric position in the casing (1), the first driver (3) occupying an eccentric position on the receiving base (2).

3. An electrical household appliance according to claim 2, **characterised in that** a storage drawer (100) is provided in the casing (1) facing the motor (10).

4. An electrical household appliance according to any one of claims 2 to 3, **characterised in that** the motor (10) is located on the edge of the periphery of the casing (1).

5. An electrical household appliance according to any one of claims 2 to 4, **characterised in that** the second driver (4) occupies a central position on the receiving base (2).

6. An appliance according to any one of claims 1 to 5, **characterised in that** the speed reducer is made up of a gear (15) carried by the output shaft (1 0A) of the motor which meshes on a toothed wheel (40) rotationally fixed with the second driver (4).

7. .An electrical household appliance according to any one of claims 1 to 6, **characterised in that** the first container (5) and the second container (7) have different shapes and dimensions and **in that** the receiving base (2) comprises, for each of the containers (5, 7), an imprint (21, 22) adapted to cooperate with the lower end of the container (5, 7) and to position the latter such that its work tool (6, 8) engages on one of the drivers (3, 4).

8. An appliance according to any one of claims 1 to 7, **characterised in that** the work tool (6) occupies an eccentric position in the bottom of the first container (5).

9. An appliance according to claim 8, **characterised in that** the first container (5) contains a bottom (50) with a lower portion (50A) receiving the work tool (6) and an elevated portion (50B) forming a step in the bottom of the container, the elevated portion (50B) being connected to the lower portion (50A) by a curved surface (50C) with a point of inflexion (A).

10. An appliance according to any one of claims 1 to 9, **characterised in that** the second container (7) comprises a cylindrical bottom (70) and **in that** the work tool (8) is centred in the bottom (70) of the container.

11. An appliance according to any one of claims 1 to 10, **characterised in that** the casing (1) contains a safety device with a safety switch (14) that can be actuated by a safety rod (12) extending into the casing (1), said safety rod (12) being moved in translation by the skirt (51) of the container (5) or by a detection element (74) carried by the container (7).

## Patentansprüche

1. Elektrohaushaltsgerät für kulinarische Zubereitungen, umfassend ein Gehäuse (1), das einen Motor (10) einschließt, der eine Ausgangswelle (10A) umfasst, die gleichzeitig, mit unterschiedlichen Drehzahlen, mindestens einen ersten Mitnehmer (3) und einen zweiten Mitnehmer (4) antreibt, die zueinander axial versetzt und auf Höhe eines gleichen Aufnahmesockels (2) angeordnet sind, wobei das Gerät mindestens einen ersten Behälter (5) und einen zweiten Behälter (7) umfasst, die abwechselnd auf dem Aufnahmesockel (2) angeordnet werden können, wobei sie alle Mitnehmer (3, 4) abdecken, wobei der erste Behälter (5) ein Arbeitswerkzeug (6) einschließt, das auf den ersten Mitnehmer (3) aufgekoppelt wird, und wobei der zweite Behälter (7) ein Arbeitswerkzeug (8) einschließt, das auf den zweiten Mitnehmer (4) aufgekoppelt wird, **dadurch gekennzeichnet, dass** der erste Mitnehmer (3) direkt auf der Ausgangswelle (10A) des Motors befestigt ist, wobei der Motor (10) unter dem Aufnahmesockel (2) angeordnet ist, und **dadurch**, dass der zweite Mitnehmer (4) über einen Drehzahlminderer (15, 40) mit der Motorausgangswelle (10A) verbunden ist.

2. Elektrohaushaltsgerät nach Anspruch 1 , **dadurch gekennzeichnet, dass** der Motor (10) eine außermittige Position im Gehäuse (1) einnimmt, wobei der erste Mitnehmer (3) eine außermittige Position auf dem Aufnahmesockel (2) einnimmt.

3. Elektrohaushaltsgerät nach Anspruch 2, **dadurch gekennzeichnet, dass** ein Aufbewahrungsfach (100) im Gehäuse (1) gegenüber dem Motor (10) angeordnet ist.

4. Elektrohaushaltsgerät nach einem der Ansprüche 2 bis 3, **dadurch gekennzeichnet, dass** der Motor (10) an der Begrenzung des Randbereiches des Gehäuses (1) angeordnet ist.

5. Elektrohaushaltsgerät nach einem der Ansprüche 2 bis 4, **dadurch gekennzeichnet, dass** der zweite Mitnehmer (4) eine mittige Position auf dem Aufnahmesockel (2) einnimmt.

6. Elektrohaushaltsgerät nach einem der Ansprüche 1 bis 5, **dadurch gekennzeichnet, dass** der Drehzahlminderer von einem Ritzel (15) gebildet wird, das von der Ausgangswelle (10A) des Motors getragen wird und das in ein Zahnrad (40) eingreift, das mit dem zweiten Mitnehmer (4) drehfest verbunden ist.

7. Elektrohaushaltsgerät nach einem der Ansprüche 1 bis 6, **dadurch gekennzeichnet, dass** der erste Behälter (5) und der zweite Behälter (7) unterschiedliche Formen und Abmessungen aufweisen, und **dadurch**, dass der Aufnahmesockel (2) für jeden der Behälter (5, 7) eine Vertiefung (21, 22) umfasst, die angepasst ist, um mit dem unteren Ende des Behälters (5, 7) zusammenzuwirken und Letzteren so zu positionieren, dass sein Arbeitswerkzeug (6, 8) mit einem der Mitnehmer (3, 4) verkoppelt wird.

8. Elektrohaushaltsgerät nach einem der Ansprüche 1 bis 7, **dadurch gekennzeichnet, dass** das Arbeitswerkzeug (6) eine außermittige Position auf dem Boden des ersten Behälters (5) einnimmt.

9. Elektrohaushaltsgerät nach Anspruch 8, **dadurch gekennzeichnet, dass** der erste Behälter (5) einen Boden (50) umfasst, der einen unteren Teil (50A), der das Arbeitswerkzeug (6) aufnimmt, und einen erhöhten Teil (50B) aufweist, der eine Stufe im Boden des Behälters bildet, wobei der erhöhte Teil (50B) über eine gekrümmte Fläche (50C), die einen Wendepunkt (A) aufweist, mit dem unteren Teil (50A) verbunden ist.

10. Elektrohaushaltsgerät nach einem der Ansprüche 1 bis 9, **dadurch gekennzeichnet, dass** der zweite Behälter (7) einen Boden (70) umfasst, der eine zylindrische Form aufweist, und **dadurch**, dass das Arbeitswerkzeug (8) mittig auf dem Boden (70) des Behälters angeordnet ist.

11. Elektrohaushaltsgerät nach einem der Ansprüche 1 bis 10, **dadurch gekennzeichnet, dass** das Gehäuse (1) eine Sicherheitsvorrichtung einschließt, die einen Sicherheitsschalter (14) umfasst, der über ein Sicherheitsglied (12) betätigt werden kann, das sich im Inneren des Gehäuses (1) erstreckt, wobei das Sicherheitsglied (12) vom Mantel (51) des Behälters (5) oder von einem Erfassungselement (74), das vom Behälter (7) getragen wird, verschoben wird.
